# EUROPÄISCHE PATENTSCHRIFT

(11) **EP 3 635 677 B1**
(45) Veröffentlichungstag und Bekanntmachung des Hinweises auf die Patenterteilung: **04.12.2024**
(21) Anmeldenummer: 18729105.9
(22) Anmeldetag: 04.06.2018
(51) Int. Cl.: G06T 5/73, G06T 5/10, G06T 5/50, H04N 5/21, H04N 23/80, H04N 23/957

(54) **VERFAHREN UND VORRICHTUNG ZUR BILDKORREKTUR**
METHOD AND DEVICE FOR IMAGE CORRECTION
PROCÉDÉ ET DISPOSITIF DE CORRECTION D'IMAGE

(30) Priorität: 07.06.2017 DE 102017112484
(43) Veröffentlichungstag der Anmeldung: 15.04.2020
(73) Patentinhaber: Carl Zeiss AG, 73447 Oberkochen (DE)
(72) Erfinder: DERNDINGER, Eberhard, 73434 Aalen (DE)
(74) Vertreter: Kraus & Lederer PartGmbB
(86) Internationale Anmeldenummer: PCT/EP2018/064635
(87) Internationale Veröffentlichungsnummer: WO 2018/224444

(56) Entgegenhaltungen:
- US-A1- 2004 005 098
- US-A1- 2012 288 212
- US-A1- 2014 270 565

## Beschreibung

Die vorliegende Anmeldung betrifft Verfahren und Vorrichtungen zu Bildkorrektur sowie entsprechende Computerprogramme. Insbesondere betrifft die vorliegende Anmeldung derartige Verfahren und Vorrichtungen, welche zur Korrektur eines Einflusses von Luftschlieren und/oder zur Bildstabilisation, insbesondere auch für Videos, das heißt Bildsequenzen, verwendet werden können. Derartige Bildkorrekturen, bei denen Einflüsse von Störungen wie Luftschlieren kompensiert werden, werden auch als Bildrestauration bzw. Videorestauration bezeichnet.

Wenn optische Systeme, wie beispielsweise Fernrohre oder Kameras, in der Atmosphäre verwendet werden, können Störungen der optischen Abbildung des optischen Systems durch Luftschlieren auftreten. Luftschlieren können beispielsweise durch Sonneneinstrahlung verursacht werden, welche wiederum Luftturbulenzen verursacht. Solche optischen Systeme werden häufig mit Kameras oder Bildsensoren gekoppelt, um eine Bildaufnahme zu ermöglichen.

Derartige Luftschlieren können zu einem Flimmern, also zu einer Bewegung, in dem Bild und/oder zu Unschärfe in dem Bild, welches durch das optische System betrachtet werden kann oder über das optische System aufgenommen werden kann, führen.

Eine unerwünschte Bewegung in dem Bild kann ebenso entstehen, wenn das optische System während der Bildaufnahme unbeabsichtigt bewegt wird, beispielsweise durch Erschütterungen eines verwendeten Stativs. Bei Bildaufnahmeeinrichtungen, die scannend (abtastend) arbeiten, z.B. mit einem Zeilensensor, der ein Objekt zeilenweise aufnimmt, oder einem Sensor mit einem einzigen Bildpunkt, der ein aufzunehmendes Objekt abtastet, können durch eine Abtastbewegung zusätzliche Störungen auftreten. Ein Beispiel für einen Zeilensensor ist ein so genanntes Schlitz-Scan-Laserscanmikroskop (LSM), ein Beispiel für eine Aufnahme eines einzigen Bildpunktes verbunden mit einem Abtasten eines Objekts ist ein Elektronenmikroskop oder ein gewöhnliches Laserscanmikroskop. Derartige Bewegungen können translatorische und/oder rotatorische Komponenten aufweisen, d.h. es kann sowohl eine Verschiebung als auch eine Drehung auftreten.

Bildstörungen, die eine Bewegung verursachen, wie das oben erwähnte Flimmern oder unbeabsichtigte Bewegungen des optischen Systems sind insbesondere auch bei Videoaufnahmen störend, d.h. in dem Fall, in dem eine Vielzahl von aufeinanderfolgenden Bildern aufgenommen wird.

Bei digitaler Bildaufnahme mit einem Bildsensor, wie er heutzutage üblicherweise eingesetzt wird, besteht die Möglichkeit, aufgenommene Bilder durch nachträgliche rechnergestützte Bearbeitung zu verbessern. Um beispielsweise unerwünschte Bewegungen oder Flimmern nachträglich durch entsprechende Bildverarbeitung zu korrigieren, gibt es verschiedene Herangehensweisen. So wird bei manchen Herangehensweisen das Flimmern durch eine Registrierung von markanten Mustern wie beispielsweise markanten Kanten im Bild verringert. In anderen Worten werden in einer Abfolge von Bildern, beispielsweise einem Video, markante Kanten bestimmt, und die Bilder werden so korrigiert, dass die Muster in aufeinanderfolgenden Bildern zur Deckung gebracht werden. Diese Herangehensweise funktioniert gut, wenn in den Bildern entsprechende markante Muster, z.B. Kanten, vorhanden sind, zum Beispiel viele Häuser mit Fenstern auftreten. Bei Naturaufnahmen mit Büschen, Gras usw. wird es schwierig, weil markante Kanten oder andere geeignete Muster weniger oder nicht vorhanden sind. Wenn die Registrierung von markanten Mustern in einem derartigen Fall nicht funktioniert, kann dies auch negative Auswirkungen auf eine nachfolgende Schärfung der Bilder haben, wenn ein verwendeter Schärfungsalgorithmus auf mehrere aufeinanderfolgende Bilder angewendet wird.

Eine weitere Herangehensweise ist das sogenannte "Speckle Imaging", welches beispielsweise in C.J. Carrano, "Speckle Imaging over Horizontal Paths", Lawrence Livermore National Laboratory, 8. Juli 2002 beschrieben ist. Weitere Informationen hierzu finden sich z.B. in G. Weigelt und B. Wirnitzer, OPTICS LETTERS Vol. 8, Nr. 7, 1983, S. 389ff oder Taylor W. Lawrence et al., OPTICAL ENGINEERING Vol. 31, Nr. 3, S. 627ff, 1992. Ein Hauptnachteil des Speckle Imaging ist, dass hierfür viel Rechenzeit oder entsprechend leistungsstarke Rechner benötigt werden. Das Speckle Imaging wurde ursprünglich hauptsächlich in der Astronomie genutzt, wo zumindest bei vielen Anwendungen ausreichend Zeit für die Bildnachbearbeitung und/oder entsprechende Rechnerkapazität zur Verfügung steht. Für terrestrische Aufnahmen, die häufig in Echtzeit erfolgen sollen, ist die Implementierung einer derartigen Herangehensweise auf Basis des Speckle Imaging zumindest sehr aufwändig, da speziell entworfene Hardware (beispielsweise ASICs, anwendungsspezifische integrierte Schaltkreise) benötigt werden, oder sogar unmöglich. Zudem werden bei dem Speckle Imaging-Algorithmus sich bewegende Objekte, zum Beispiel laufende Personen oder fahrende Kraftfahrzeuge, genauso wie Luftschlieren bearbeitet. Dies kann zu Artefakten führen, bei denen diese sich bewegenden Objekte typischerweise verschmiert werden oder teilweise sogar verschwinden.

Aus der deutschen Patentanmeldung mit dem Aktenzeichen DE 10 2015 120 967.5 ist ein Verfahren bekannt, bei welchem Bilder in Kacheln unterteilt werden und die Kacheln in den Ortsfrequenzraum transformiert werden. Es werden Verschiebungen durch Auswertung der Argumente der Spektraldichtefunktion der Kacheln im Ortfrequenzraum identifiziert und zumindest ein Teil der identifizierten Verschiebungen, insbesondere durch Mittelung, kompensiert. Die Kacheln werden dann in den Ortsraum rücktransformiert, und die rücktransformierten Kacheln werden zusammengesetzt. Die Mittelung erfolgt dabei insbesondere separat für Argument und Betrag der Spektraldichtefunktion im Ortsfrequenzraum.

Diese Vorgehensweise arbeitet bei relativ geringen Störungen und geringem Rauschen gut. Bei stärkeren Turbulenzen und/oder größerem Rauschen kann es aber zu Einschränkungen kommen. Insbesondere können größere, komplexere Fluktuationen in den Bildern bei höheren Frequenzen, entsprechend feinen Strukturen im Ortsbereich, manchmal nicht zuverlässig erkannt und restauriert werden.

Die US 2012/288212 A1 offenbart ein Verfahren zur Bildbearbeitung, welches eine optische Transferfunktion über mehrere Bilder verwendet. Auf Basis der optischen Transferfunktion wird dann ein Bild einer Abfolge von Bildern restauriert. Zum Beispiel werden Luftschlieren entfernt oder vermindert.

Die US 2004/005098 A1 offenbart ebenfalls ein derartiges Verfahren, wobei hier von einer Atmosphären-Teleskop-Punktspreizfunktion ausgegangen wird, wobei mit Teleskop eine Bildaufnahmeoptik gemeint ist.

Die US 2014/270565 A1 offenbart ein weiteres derartiges Verfahren, wobei hier eine Leistungsspektraldichte atmosphärischer Turbulenzen herangezogen wird.

Es ist daher eine Aufgabe der vorliegenden Erfindung, weiter verbesserte Verfahren, Vorrichtungen und entsprechende Computerprogramme zur Bildkorrektur bereitzustellen, welche insbesondere bei größeren, komplexeren Fluktuationen und/oder höherem Rauschen verbesserte Ergebnisse verglichen mit dem oben genannten Stand der Technik liefern.

Hierzu wird ein Verfahren gemäß Anspruch 1, eine Vorrichtung gemäß Anspruch 9 sowie ein Computerprogramm nach Anspruch 12 bereitgestellt. Die Unteransprüche definieren vorteilhafte und bevorzugte Ausführungsformen.

Typische Fluktuationssignaturen können durch Experimente ermittelt werden und bestimmten Bildkorrekturen (Restaurationsinformationen) zugeordnet werden, welche dann bei der Durchführung des obigen Verfahrens auf die Bilder angewendet werden.

Auf diese Weise kann mit vergleichsweise geringem Rechenaufwand eine unerwünschte Bewegung aus der Abfolge von Bildern herausgerechnet werden. Durch die Behandlung im Ortsfrequenzraum ist z.B. verglichen mit Verfahren, die im Ortsraum arbeiten, keine Registrierung an markanten Bildteilen wie z.B. Kanten und dergleichen nötig, sodass das Verfahren auch in Situationen robust arbeiten kann, in denen derartige markante Bildteile nicht oder kaum vorhanden sind. Zudem kann - bei Einhaltung des Abtasttheorems - die Kompensation von Bewegungen mit einer Genauigkeit unterhalb eines Bildpunktes (Pixel) durchgeführt werden, z.B. im Bereich 0,01 Bildpunkte. Dies ist mit Verfahren, die im Ortsraum arbeiten, häufig nicht möglich.

Die Abfolge von Bildern kann dabei mit kurzer Beleuchtungszeit, die insbesondere so kurz sein kann, dass praktisch keine Bewegungsunschärfe auftritt, und hoher Bildfrequenz aufgenommen werden. So kann die Beleuchtungszeit kleiner oder gleich 1/100 s, kleiner oder gleich 1/500 s oder kleiner oder gleich 1/1000 s sein, und/oder die Bildfrequenz kann größer oder gleich 5 Bilder/Sekunde, größer oder gleich 10 Bilder/Sekunde, größer oder gleich 20 Bilder/Sekunde und/oder größer oder gleich 50 Bilder/Sekunde sein. Bei solchen Bildern können insbesondere niedrigere Frequenzen im Ortsfrequenzraum ausgewertet werden, die verglichen mit hohen Frequenzen eine hohe Amplitude aufweisen.

Durch die Verwendung von Fluktuationssignaturen können dabei insbesondere auch größere, stärkere oder komplexere Fluktuationen bestimmt werden.

Die Fluktuationssignatur wird erfindungsgemäß auf Basis eines Vergleichs der Fluktuationssignatur im Ortsfrequenzraum auf Basis der Abfolge von Bildern mit mehreren gespeicherten Fluktuationssignaturen identifiziert.

Das Restaurieren erfolgt dann auf Basis einer den gespeicherten Fluktuationssignaturen zugeordneten Restaurationsinformation.

So kann durch eine Kalibrierung vorher festgelegt werden, bei welchen Fluktuationssignalen die Kalibrierung durchgeführt wird.

Die Fluktuationssignatur eine Mehrzahl von komplexwertigen Punkten aufweisen, wobei jeder Punkt einem Bild der Abfolge von Bildern zugeordnet ist. So kann die Fluktuationssignatur das Verhalten von Fluktuationen über die Zeit der Abfolge von Bildern beschreiben.

Das Verfahren kann weiter ein Schärfen über einander entsprechenden Kacheln der Abfolge von Bildern vor oder nach dem Zusammensetzen umfassen.

Das Verfahren kann weiter umfassen:
Unterteilen der Bilder in eine oder mehrere Kacheln,
Transformieren der Kacheln in den Ortsfrequenzraum,
Identifizieren von linearen Verschiebungen in den Kacheln,
Kompensieren zumindest eines Teils der identifizierten linearen Verschiebungen, und Rücktransformieren der Kacheln in den Ortsraum,
wobei das Unterteilen, das Transformieren, das Identifizieren, das Kompensieren und das Rücktransformieren N · N ≥ 1, wiederholt wird,
wobei die identifizierten linearen Verschiebungen gespeichert werden,
wobei die Fluktuationssignatur auf den Verschiebungen basiert.

Eine Kachelgröße bei dem Unterteilen der Bilder in Kacheln kann in Abhängigkeit von der Größe von Luftschlieren bei der Bildaufnahme und/oder in Abhängigkeit von einer Stärke von Verwacklungen bei der Bildaufnahme festgelegt werden.

Durch die schrittweise Verkleinerung können beispielsweise auch kleinere Luftturbulenzzellen berücksichtigt werden und schrittweise kleinere Verschiebungen herausgerechnet werden, was die Bildqualität weiter verbessert.

Ein Faktor, um den die Kacheln verkleinert werden, kann sich zwischen mindestens zweien der Wiederholungen unterscheiden.

Hierdurch kann der Rechenaufwand weiter verringert werden, indem die herangezogenen Kacheln dynamisch an die Erfordernisse angepasst werden.

Die Bilder können Farbbilder sein. Dabei kann das Unterteilen, das Transformieren und das Rücktransformieren für jeden Farbkanal getrennt durchgeführt werden.

Das Identifizieren der linearen Verschiebung kann ein Ermitteln eines Proportionalitätsfaktors im Ortsfrequenzraum durch ein Fitten einer Ebene im Ortsfrequenzraum umfassen.

Das Fitten kann auf Basis von Differenzen von Bild zu Bild der Abfolge von Bildern vorgenommen werden.

Das Verfahren kann ein Mitteln im Ortsfrequenzraum über mehrere Bilder umfassen. So kann Rauschen unterdrückt werden.

Das Verfahren kann weiter ein Anwenden eines Wiener Filters umfassen, falls die Fluktuationssignatur, z.B. auf Basis von Rauschen, nicht identifizierbar ist. So können Fälle starken Rauschens berücksichtigt werden.

Ein oder mehrere Verfahrensschritte des oben beschriebenen Verfahrens können dynamisch in Abhängigkeit von den Kacheln und/oder einem Inhalt der Bilder angepasst werden. So ist eine flexible Herangehensweise je nach den Erfordernissen möglich.

Ein oder mehrere Verfahrensschritte des oben beschriebenen Verfahrens können parallelisiert durchgeführt werden, um die Geschwindigkeit zu erhöhen. Beispielsweise können die Transformation und/oder andere beschriebene Berechnungen, welche je nach Bildgröße relativ zeitaufwändig sein können, parallelisiert durchgeführt werden. Beispielsweise kann die Berechnung für jede Kachel oder auch für Gruppen von Kacheln in getrennten Recheneinrichtungen, z.B. getrennten Kerneln, erfolgen. Bei anderen Ausführungsformen kann die Transformation auch für verschiedene Zeilen und/oder Spalten des Bildes parallel durchgeführt werden.

Erfindungsgemäß wird eine Vorrichtung zur Bildbearbeitung gemäß Anspruch 9 bereitgestellt.

Die Vorrichtung kann zur Durchführung eines der oben beschriebenen Verfahren eingerichtet sein.

Die Vorrichtung kann weiter ein optisches System und eine mit dem optischen System gekoppelte Kameraeinrichtung zum Aufnehmen der Abfolge von Bildern umfassen. Die Kameraeinrichtung kann beispielsweise einen 2d-Bildsensor, bei dem n x m Bildpunkte, n,m jeweils >1, gleichzeitig aufgenommen werden, aufweisen. Sie kann aber auch einen 1d-Bildsensor (Zeilensensor) oder einen 0d-Bildsensor (einen einzelnen Bildpunkt) aufweisen und scannend arbeiten, um z.B. ein gewünschtes Objekt aufzunehmen.

Zudem wird ein Computerprogramm mit einem Programmcode, der, wenn er auf einer Recheneinrichtung ausgeführt wird, das Verfahren wie oben beschrieben durchführt, bereitgestellt.

Das Computerprogramm kann beispielsweise auf einem Datenträger oder in einem Speicher vorliegen oder über ein Netzwerk bereitgestellt werden.

Die Erfindung wird nachfolgend anhand von Ausführungsformen unter Bezugnahme auf die beigefügten Zeichnungen näher erläutert.
Figur 1 zeigt eine schematische Darstellung einer Vorrichtung gemäß einem Ausführungsbeispiel,
Figur 2 zeigt ein Flussdiagramm zu Veranschaulichung eines Verfahrens gemäß einem Ausführungsbeispiel, und
Figuren 3 und 4 zeigen Diagramme zur Veranschaulichung mancher Schritte des Ausführungsbeispiels der Figur 2.
Figur 5 zeigt ein Diagramm zur Veranschaulichung einer Funktion im Ortsfrequenzraum.
Figur 6 veranschaulicht eine Verschiebung des Bildinhalts für zwei Bilder in einer Dimension.
Figur 7 zeigt ein Diagramm zur Veranschaulichung einer Bestimmung eines Proportionalitätsfaktors.
Figur 8 zeigt eine Datenablage in einem Ringspeicher in dem Verfahren der Figur 2.
Figur 9 zeigt ein Diagramm zum Veranschaulichen einer Fluktuationssignatur.

Im Folgenden werden verschiedene Ausführungsbeispiele detailliert erläutert. Es ist zu bemerken, dass diese Ausführungsbeispiele lediglich der Veranschaulichung dienen und nicht als einschränkend auszulegen sind. Beispielsweise werden Ausführungsbeispiele mit einer Vielzahl von Elementen oder Komponenten dargestellt. Dies ist nicht dahingehend auszulegen, dass alle diese Elemente oder Komponenten für die Implementierung von Ausführungsbeispielen unerlässlich sind. Vielmehr können andere Ausführungsbeispiele auch weniger als die dargestellten oder beschriebenen Elemente oder Komponenten und/oder alternative Elemente oder Komponenten aufweisen. Bei wieder anderen Ausführungsbeispielen können zusätzliche Elemente oder Komponenten bereitgestellt sein, beispielsweise in herkömmlichen optischen Systemen oder Recheneinrichtungen verwendete Elemente. Komponenten oder Elemente verschiedener Ausführungsbeispiele können miteinander kombiniert werden, sofern nichts anderes angegeben ist. Variationen und Abwandlungen, welche für eines der Ausführungsbeispiele beschrieben werden, können auch auf andere Ausführungsbeispiele angewendet werden. Der Schutzbereich der Erfindung und ihrer Ausführungsformen ist durch die angefügten Ansprüche festgelegt.

Die vorliegende Erfindung befasst sich mit Bildkorrekturen. Unter einem Bild im Rahmen der vorliegenden Anmeldung wird ein Einzelbild oder ein Bild eines Videos, welches sich aus einer Vielzahl von aufeinanderfolgenden Bildern zusammensetzt, verstanden. Im Falle von Videos wird ein derartiges Bild auch als Frame bezeichnet. Eine Abfolge von Bildern bezeichnet im Rahmen dieser Anmeldung eine Folge von hintereinander aufgenommenen Bildern. Eine derartige Abfolge von aufeinanderfolgenden Bildern kann beispielsweise als Video aufgenommen oder wiedergegeben werden, oder als Folge kurz hintereinander aufgenommener Einzelbilder.

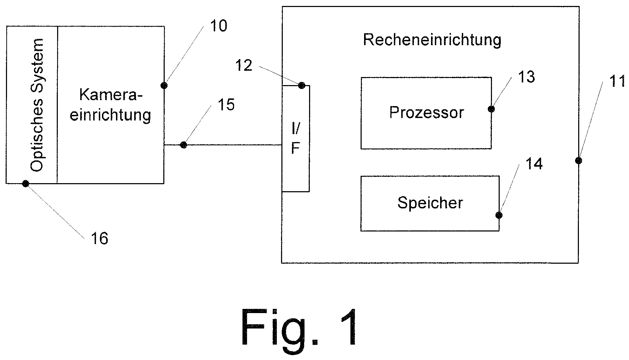

Figur 1 zeigt eine Vorrichtung gemäß einem Ausführungsbeispiel. Die Vorrichtung der Figur 1 umfasst eine mit einem optischen System 16 gekoppelte Kameraeinrichtung 10. Das optische System 16 kann beispielsweise ein Fernrohr, ein Teleskop oder ein Mikroskop sein, mit dem die Kameraeinrichtung 10 gekoppelt ist. Das optische System 16 kann bei einem anderen Ausführungsbeispiel auch einfach ein Kameraobjektiv der Kameraeinrichtung 10 sein. Über das optische System 16 werden ein oder mehrere aufzunehmende Objekte auf einen Bildsensor der Kameraeinrichtung 10 abgebildet, beispielsweise einen CCD-Sensor (Charge Coupled Device) oder einen CMOS-Sensor (Complementary Metal Oxide Semiconductor). Wie bereits eingangs erläutert kann die Kameraeinrichtung einen 2d-Bildsensor umfassen. Mittels Abtastung können Bilder aber auch zeilenweise mit einem 1d-Bildsensor oder Punktweise (0d-Bildsensor) aufgenommen werden. Die Begriffe Kameraeinrichtung und Bildsensor sind hier breit zu verstehen und beziehen sich auf jede Art von Einrichtung, mit der Bilder von einem oder mehreren Objekten aufgenommen werden können, und umfassen beispielsweise auch Elektronenmikroskope und Laserscanmikroskope (LSM). Die Kameraeinrichtung 10 kann somit über das optische System 16 eine Abfolge digitaler Bilder aufnehmen. Die Abfolge von Bildern kann dabei mit kurzer Beleuchtungszeit, die insbesondere so kurz sein kann, dass praktisch keine Bewegungsunschärfe auftritt, und hoher Bildfrequenz aufgenommen werden. So kann die Beleuchtungszeit kleiner oder gleich 1/100 s, kleiner oder gleich 1/500 s oder kleiner oder gleich 1/1000 s sein, und/oder die Bildfrequenz kann größer oder gleich 5 Bilder/Sekunde, größer oder gleich 10 Bilder/Sekunde, größer oder gleich 20 Bilder/Sekunde und/oder größer oder gleich 50 Bilder/Sekunde sein. Bei solchen Bildern können insbesondere niedrigere Frequenzen im Ortsfrequenzraum ausgewertet werden, die verglichen mit hohen Frequenzen eine hohe Amplitude aufweisen. Die so mit kurzer Beleuchtungszeit aufgenommenen Bilder können ein vergleichsweise hohes Rauschen aufweisen, das aber die Durchführung der hier beschriebenen Techniken nicht wesentlich hindert.

Die Vorrichtung der Figur 1 umfasst weiter eine Recheneinrichtung 11, welche beispielsweise einen oder mehrere Prozessoren 13 und zugeordneten Speicher 14, beispielsweise nichtflüchtigen Speicher (z.B. Flash-Speicher), Speicher mit wahlfreiem Zugriff (RAM) oder Nur-Lesespeicher (ROM) aufweisen kann. In dem Speicher 14 kann insbesondere ein Programmcode gespeichert sein, welcher die Ausführung der nachfolgend näher beschriebenen Bildkorrekturen ermöglicht, wenn der Programmcode in der Recheneinrichtung 11 auf dem Prozessor 13 ausgeführt wird. Der Programmcode kann der Recheneinrichtung 11 beispielsweise über einen Datenträger (Speicherkarte, CD- oder DVD-Datenträger etc.) oder über ein Netzwerk zugeführt werden.

Um die Bilder, welche von der Kameraeinrichtung 10 empfangen wurden, bearbeiten zu können, kann die Recheneinrichtung 11 die Bilder mittels einer Schnittstelle 12 über eine Verbindung 15 empfangen. Diese kann beispielsweise direkt über eine drahtgebundene oder drahtlose Verbindung erfolgen, z.B. wenn die Kameraeinrichtung 10 und die Recheneinrichtung 11 räumlich zusammenhängend, beispielsweise in einem Mikroskopsystem, angeordnet sind. Es ist jedoch durchaus auch möglich, dass beispielsweise in der Kameraeinrichtung 10 die Bilder auf eine Speicherkarte oder andere Speichermedien geschrieben werden und dann von diesem Speichermedium auf die Recheneinrichtung 11 übertragen werden. Auch eine Übertragung über Rechnernetze, beispielsweise das Internet, gegebenenfalls auch mit einer oder mehreren Zwischenstationen, ist möglich. Die Verarbeitung der Bilder in der Recheneinrichtung kann zeitnah unmittelbar nach der Aufnahme der Bilder, insbesondere auch in Echtzeit, aber auch zeitlich getrennt erfolgen. Bei anderen Ausführungsbeispielen kann die Recheneinrichtung 11 in der Kameraeinrichtung 10 integriert sein, beispielsweise innerhalb einer Videokamera. Somit impliziert die Darstellung der Figur 1 keine besondere räumliche Beziehung zwischen der Kameraeinrichtung 10 mit dem optischen System 16 einerseits und der Recheneinrichtung 11 andererseits.

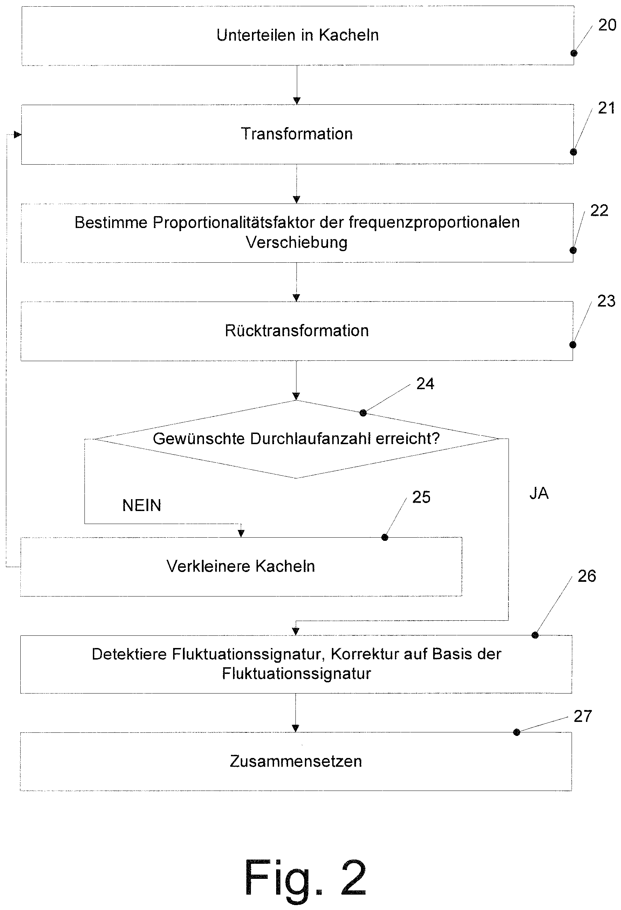

Die Recheneinrichtung kann mit einer aufgenommenen Abfolge von Bildern insbesondere eine Reihe von Verarbeitungsschritten durchführen, welche nachfolgend unter Bezugnahme auf die Figur 2 näher werden. Diese Schritte können wie bereits erläutert mittels einer entsprechenden Programmierung des Prozessors 13 implementiert sein. Der Prozessor 13 kann dabei ein universell verwendbarer Prozessor wie eine CPU sein, aber beispielsweise auch ein spezieller Grafikprozessor oder anderer Prozessor oder eine Kombination hiervon sein. Spezielle Grafikprozessoren werden beispielsweise häufig innerhalb von Kameras eingesetzt, während zur Bildbearbeitung beispielsweise auf einem Computer häufig allgemeine Prozessoren zum Einsatz kommen. Die Implementierung der vorliegenden Erfindung ist in dieser Hinsicht nicht auf irgendeine besondere Anordnung begrenzt. Grundsätzlich ist es auch ebenso möglich, die nachfolgend beschriebene Bildbearbeitung mittels spezieller Hardware-Bausteine, beispielsweise anwenderspezifischen integrierten Schaltkreisen (ASICs) oder feldprogrammierbaren Gatteranordnungen (FPGA, vom englischen Field Programmable Gate Array) zu implementieren.

Figur 2 zeigt ein Flussdiagramm eines Verfahrens gemäß einem Ausführungsbeispiel, welches beispielsweise wie oben erläutert in der in Figur 1 diskutierten Vorrichtung, insbesondere der Recheneinrichtung 11, implementiert sein kann.

Zur Durchführung des Verfahrens wird eine Abfolge von Bildern herangezogen. Um beispielsweise ein bestimmtes Bild der Abfolge von Bildern zu bearbeiten, wird eine gewisse Anzahl von Nachbarbildern herangezogen, zum Beispiel 15 Bilder vor und 15 Bilder nach dem bestimmten Bild. Das bestimmte Bild kann auch als zu restaurierendes Bild bezeichnet werden. In diesem Beispiel würde also zur Restaurierung eines bestimmten Bildes ein Block von 31 insbesondere aufeinanderfolgend aufgenommenen Bildern herangezogen werden. Die Anzahl von 15 Bildern vor und nach dem zu restaurierenden Bild dient hier aber nur als Beispiel, und es kann auch eine beliebige andere Anzahl verwendet werden, je nach zur Verfügung stehenden Bildern und zur Verfügung stehender Rechenleistung. Die Anzahl von herangezogenen Bildern vor und nach dem zu restaurierenden Bild muss dabei nicht gleich sein. Die Bilder werden bevorzugt kurz hintereinander mit kürzerer zeitlicher Apertur aufgenommen.

In der Abfolge von Bildern können über der Zeit, d.h. von Bild zu Bild, verschiedene Ereignisse zur Änderung des Bildinhalts führen. Manche dieser Ereignisse sind dabei unerwünscht und können durch das erfindungsgemäße Verfahren korrigiert werden.

So kann die Kameraeinrichtung eine translatorische und/oder rotatorische Bewegung durchführen, welche im Falle von Erschütterungen und dergleichen unerwünscht ist. Diese Bewegung führt zu einer entsprechenden Bewegung des Bildinhalts. Auch kann sich ein gesamtes aufgenommenes Objekt bewegen. Des Weiteren kann durch Luftschlierenstörungen wie bereits erläutert ein Flimmern erzeugt werden. Schließlich können sich auch nur Teile des aufgenommenen Bildes bewegen, beispielsweise wenn ein bewegliches Objekt wie ein Automobil oder ein Lastkraftwagen aufgenommen wird.

Das Verfahren der Figur 2, wie es zunächst erläutert werden wird, eignet sich insbesondere für Schwarz-Weiß- bzw. Graustufen-Bilder. Eine Übertragung auf Farbbilder wird später näher erläutert.

In Schritt 20 der Figur 2 werden die Bilder der Abfolge von Bildern in Kacheln, d.h. in Teilbereiche unterteilt.

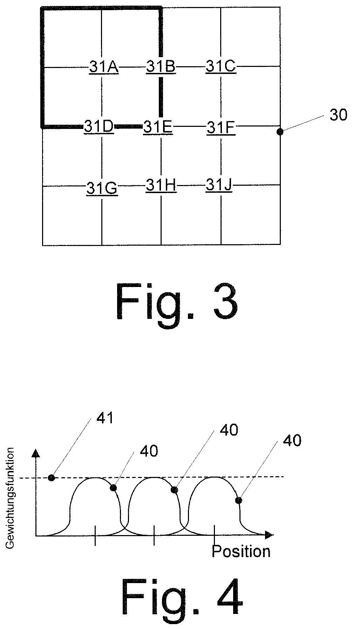

Das Unterteilen in Kacheln aus Schritt 20 wird unter Bezugnahme auf die Figuren 3 und 4 erklärt. Bevorzugt weisen dabei die Kacheln eine oder mehrere der folgenden Eigenschaften auf:
- Die Größe der Kacheln sollte möglichst kleiner als die größten Bereich von Störungen in dem Bild sein, im Falle der Kompensation von Luftschlieren beispielsweise kleiner als die größten Zellen von Luftschlieren.
- Verschiebungen des Bildes durch Verwackeln und dergleichen, beispielsweise instabile Stativhalterungen eines Fernrohrs, sollten deutlich kleiner als die Größe der Kacheln, beispielsweise höchstens die Hälfte, höchstens ein Drittel oder höchstens ein Viertel, der Kachelgröße sein.
- Die Kacheln sollten am Ende des Verfahrens in einfacher Weise wieder zusammengefügt werden können.

Eine Kachelgröße für Schritt 20 kann beispielsweise eine Kantenlänge im Bereich von einem Viertel oder einem Achtel der Bildgröße sein. Die Kacheln können quadratisch sein. Bei einem typischen Bild mit 2048 x 1024 Pixeln (Bildpunkten) kann beispielsweise eine Kachelgröße von 256 x 256 Pixeln gewählt werden, wobei auch andere Größen möglich sind. Bevorzugt überlappen sich die Kacheln dabei so, dass jedes Pixel, das nicht im Randbereich liegt, in vier Kacheln vorhanden ist. Zur Veranschaulichung zeigt Fig. 3 eine derartige Aufteilung. Bei dem Beispiel der Fig. 3 wird ein Bild 30 in neun Kacheln (3 x 3) 31A-31J aufgeteilt. Jede Kachel umfasst vier der kleinen Quadrate, wobei das Bezugszeichen jeweils in der Mitte steht. Um dies zu verdeutlichen, ist die Kachel 31A in Fig. 3 fett umrandet dargestellt.

Wie zu sehen ist, gehören bei dieser Aufteilung nur die Pixel in den Ecken nur zu einer Kachel, sonstige Randpixel gehören jeweils zu zwei Kacheln, und Pixel in den mittleren kleinen Quadraten gehören zu jeweils vier Kacheln. Die Figur 3 dient dabei lediglich der Veranschaulichung, und je nach Bildgröße kann die Anzahl von Kacheln auch anders, insbesondere größer sein, beispielsweise wie bei dem obigen Pixelbeispiel.

Bevorzugt werden die Kacheln mit einer Gewichtungsfunktion multipliziert. Hierdurch können Artefakte bei der in Schritt 21 folgenden Transformation unterdrückt werden. Verschiedene geeignete Fensterfunktionen für diese Gewichtung sind für sich genommen bekannt. Die Gewichtung in zwei Dimensionen für den Fall der Fig. 3 ist schematisch in Fig. 4 dargestellt. Dabei werden die drei Kacheln in jeder Richtung jeweils mit einer Gewichtungsfunktion 40 multipliziert, welche zum Rand der Kachel in abfällt. In den überlappenden Bereichen verhalten sich die Gewichtungsfunktionen bevorzugt so, dass die überlappenden Gewichtungsfunktionen in der Summe konstant sind, z.B. 1 ergeben (durch eine Linie 41 angedeutet), sodass später die Kacheln durch einfaches Aufaddieren wieder zu einem Gesamtbild vereinigt werden können. Eine geeignete Fensterfunktion ist dabei die Hanning-Fensterfunktion, wobei auch andere Fensterfunktionen verwendet werden können.

Die Zerlegung in Kacheln wird auf jedes Bild der Abfolge von Bildern (beispielsweise die 31 Bilder in dem obigen Zahlenbeispiel) angewendet.

Zu bemerken ist, dass, wenn die zu kompensierende Bewegung in dem gesamten Bild gleich ist oder im gesamten Bild auftritt, auch nur eine einzige Kachel verwendet werden kann, d.h. diese einzige Kachel umfasst dann das gesamte Bild.

In Schritt 21 wird dann auf jede der Kacheln eine Transformation vom Ortsbereich in den Ortsfrequenzbereich durchgeführt, wobei diese Transformation eine zweidimensionale Transformation entsprechend dem zweidimensionalen Bild ist. Bei einem bevorzugten Ausführungsbeispiel wird eine Fourier-Transformation, insbesondere eine schnelle Fourier-Transformation (FFT, vom englischen fast Fourier transform) verwendet. Es können aber auch andere Arten der Transformation verwendet werden, beispielsweise andere Spektraltransformationen, an welchen dann die genaue Berechnung im nachfolgenden Schritt 22 durchgeführt wird. Beispielsweise kann eine Wavelet-Transformation verwendet werden. Jedes Bild im Ortsraum entspricht dann im Ortsfrequenzraum einer entsprechenden Spektraldichte.

Diese Transformation und/oder nachfolgend beschriebene Berechnungen, welche je nach Bildgröße relativ zeitaufwändig sein kann, können bei manchen Ausführungsformen parallelisiert durchgeführt werden. Beispielsweise kann die Berechnung für jede Kachel oder auch für Gruppen von Kacheln in getrennten Recheneinrichtungen, z.B. getrennten Kerneln, erfolgen. Bei anderen Ausführungsformen kann die Transformation auch für verschiedene Zeilen und/oder Spalten des Bildes parallel durchgeführt werden. So wird beispielsweise eine schnelle 2d-Fouriertransformation (FFT, vom englischen "Fast Fourier Transform") in zwei Abschnitten durchgeführt, z.B. zunächst in einer ersten Richtung (x-Richtung, zeilenweise) und dann in einer zweiten Richtung (y-Richtung, spaltenweise). In jedem dieser beiden Abschnitte kann eine solche FFT für die verschiedenen Zeilen bzw. Spalten in unterschiedlichen Kerneln oder anderweitig mit unterschiedlichen Recheneinrichtungen durchgeführt werden, z.B. bei 1024 Zeilen in 1024 Kerneln.

In Schritt 22 wird dann ein Proportionalitätsfaktor einer frequenzproportionalen Verschiebung für die Kacheln im Ortsfrequenzraum bestimmt. Dieses Verfahren wird im Rahmen dieser Anmeldung auch als "Ebenen-Fit" bezeichnet und wird nachfolgend detailliert erläutert. Zur Vereinfachung der folgenden Beschreibung wird dabei von einem eindimensionalen Graustufenbild ausgegangen, d.h. das Bild im Ortsbereich lässt sich durch eine Funktion i(x) beschreiben. Zweidimensionale Bilder werden entsprechend behandelt, nur dass die Rechenoperationen dann in zwei Dimensionen durchgeführt werden. Transformiert in den Ortsfrequenzbereich ergibt sich eine frequenzabhängige Funktion i(f).

Mit h(x) wird in der folgenden Diskussion ein Dirac-Impuls im Ortsbereich bezeichnet, der angewendet auf das Bild (i(x)) eine Verschiebung bestimmt. Dem Dirac-Impuls h(x) entspricht eine Funktion H(f) im Ortsfrequenzbereich.

Ein z.B. durch Störungen verschobenes Bild wird mit g(x) bezeichnet, das entsprechend verschobene Bild im Ortsfrequenzbereich mit G(f). Es gilt also g(x) = h(x)*i(x) im Ortsbereich, wobei * den Faltungsoperator bezeichnet, bzw. H(f) · I(f) = G(f) im Ortsfrequenzbereich. Für eine lineare Verschiebung gilt der Verschiebungssatz:

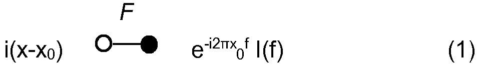

Dabei bezeichnet F die Spektraltransformation (z.B. Fourier-Transformation), die zur Transformation in den Ortsfrequenzbereich in Schritt 21 wurde. x₀ beschreibt eine Verschiebung, und e ist die Eulersche Zahl der Exponentialfunktion. f bezeichnet die Frequenz. Aus Gleichung (1) und den obigen Definitionen ergibt sich:

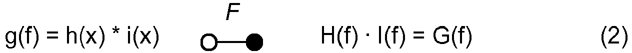

Wie zu sehen ist, entspricht die Verschiebung im Ortsraum um x₀ einer Änderung des Arguments der Spektraldichte im Ortsfrequenzraum. Aus dem Vergleich der beiden obigen Gleichungen (1) und (2) ergibt sich auch | H(f)| = 1, d.h. der Betrag der Funktion H(f) = 1, und das Argument arg {H(f)} ist proportional zu -f. Dies wird als Frequenzproportionalität bezeichnet. Wie sich ebenso ergibt, ist der Proportionalitätsfaktor ein Maß für die Verschiebung x₀. Durch Bestimmung des Arguments kann also die Verschiebung x₀ für die jeweilige Kachel bestimmt werden.

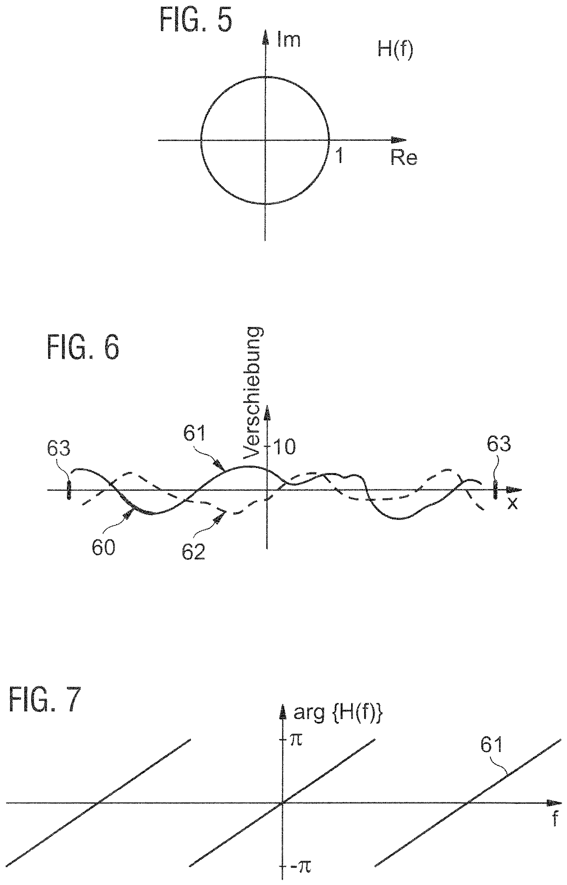

Fig. 5 veranschaulicht die Funktion H(f) mit Betrag 1 (Kreis mit Radius 1 in der in Fig. 5 dargestellten komplexen Ebene) und einem Argument, welches die Lage eines Funktionswertes auf dem Kreis bestimmt.

Beispiele für Verschiebungen sind in Fig. 6 graphisch dargestellt. In der Fig. 6 zeigen Kurven 61, 62 Beispiele für die Verschiebung in Vielfachen des Pixelabstands über der Koordinate x für zwei verschiedene Bilder i(x) einer Serie von Bildern, welche für das Verfahren der Fig. 2 aufgenommen wurde. Bildinhalte können dabei um ein Vielfaches eines Pixelabstandes des Bildes (bzw. um π bei der höchsten Frequenz) im Ortsfrequenzraum verschoben sein. Mit 63 sind die Bildenden bezeichnet, mit 60 ein Beispiel für Bereich, in dem ein Ebenen-Fit bei einer Kachel durchgeführt wird. Ausgehend von der gesamten Bildgröße zwischen den Bildenden 63 werden die Bilder in Schritt 20 des Verfahrens der Fig. 2 in Kacheln zerlegt. Bei der ersten Zerlegung ist eine Kachel in einem Beispiel so groß wie der Bereich 60. Für diesen Bereich (wie auch für andere Kacheln entsprechend anderen Bereichen) wird dann ein Ebenen-Fit durchgeführt.

Die Fig. 7 zeigt ein Beispiel 61 für das Argument der Funktion H(f) über der Frequenz. die Steigung der Kurve 61 entspricht dabei dem Proportionalitätsfaktor x₀, d.h. einer Verschiebung. Bei komplexeren Verschiebungen wird für jede Kachelgröße im Eindimensionalen eine mittlere Steigung beispielsweise durch Fitten einer Gerade bestimmt, was im zweidimensionalen Fall (d.h. für zweidimensionale Bilder) einem Fitten einer Ebene entspricht. Daher kann dieses Bestimmen der Verschiebung auch als Ebenen-Fit bezeichnet werden.

Dabei liegt für jedes Bild der Abfolge von Bildern für die in der Ortsfrequenzbereich transformierten Kacheln G(f) vor, also G₁(f), G₂(f)..., wobei der Index die Bildnummer in der Abfolge von Bildern bezeichnet. Nun muss jeweils Hₙ(f) bestimmt werden (wobei n wiederum eine Bildnummer bezeichnet). Dabei wird zunächst davon ausgegangen, dass I(f) von Bild zu Bild unveränderlich bleibt, d.h. das Bild abgesehen von Störungen statisch ist. Eine Berücksichtigung von sich bewegenden Anteilen in den Bildern wird später noch erläutert.

Es werden nun jeweils Differenzen arg{Gₙ(f)}-arg{Gₙ₋₁(f)} berechnet, die die Fluktuationen von Bild zu Bild angeben. Wie oben erläutert ist H(f) · I(f) = G(f), und die Multiplikation der komplexen Werte H(f) und I(f) entspricht einer Multiplikation der Beträge und Summation der Argumente. Da der Betrag von H(f) wie erläutert gleich 1 ist, wird durch diese Differenzbildung also die Funktion H(f) ermittelt, welche die Verschiebung von einem Bild zum nächsten Bild kennzeichnet.

In anderen Wort wird für die jeweiligen Kacheln in Schritt 22 des Verfahrens eine jeweilige lineare Verschiebung ermittelt. Diese lineare Verschiebung wird dann für die Kacheln herausgerechnet.

In Schritt 23 erfolgt dann eine Rücktransformation in den Ortsraum, beispielsweise durch eine inverse Fourier-Transformation.

In Schritt 24 wird geprüft, ob eine gewünschte Durchlaufzahl an Berechnungen erreicht ist. Falls nein, werden in Schritt 25 verkleinerte Kacheln verwendet (beispielsweise wird die Kachelgröße halbiert), und die Schritte 21 bis 23 werden mit den verkleinerten Kacheln erneut durchlaufen.

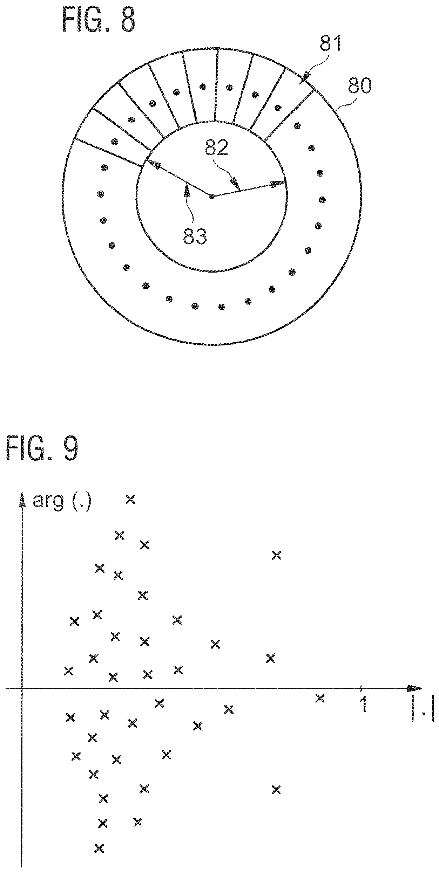

Die Ebenen-Fits werden also mit schrittweise kleineren Kacheln durchgeführt. Die gefundene Verschiebung wird dabei von Kachelebene zu Kachelebene weitergegeben. Dabei wird für jeden Durchlauf die ermittelte Verschiebung, d.h. der ermittelte Proportionalitätsfaktor im Ebenen-Fit, gespeichert. Indem bei jedem Ebenen-Fit die gefundene lineare Verschiebung herausgerechnet wird, bleiben bei den jeweils kleineren Kacheln eine restliche Fluktuation von Bild zu Bild auch bei den höchsten Frequenzen bei weniger als ±π im Ortsfrequenzbereich. Die Behandlung und Speicherung der Bilder kann dabei in einem Ringspeicher geschehen, wie er schematisch als Ringspeicher in Fig. 8 dargestellt ist. Fig. 8 zeigt einen Ringspeicher 80. Ein Zeiger 83 zeigt auf eine Bildposition (d.h. auf ein Bild einer Abfolge von Bildern), welches gerade aktualisiert wird. Ein Zeiger 82 zeigt auf eine Position des Ergebnisses der Bildrestauration, beispielsweise gegenüber der Position, die gerade aktualisiert wird. In Speicherplätzen 21 ist alles Nötige für den Ablauf des Verfahrens zu diesem Bild gespeichert, insbesondere auch Verschiebungen, welche in jedem Durchlauf in Schritt 22 enthalten. In manchen Ausführungsbeispielen kann auch bei der Aktualisierung ein alter Anteil am Mittelwert subtrahiert werden, und ein neuer Anteil hinzugezählt werden, um eine komplette Neuberechnung des Mittelwerts zu vermeiden. Ein derartiger Mittelwert kann allgemein benutzt werden, um ein Rauschen zu reduzieren. So kann beispielsweise |G(f)| über alle oder mehrere Bilder der jeweiligen Abfolge von Bildern gemittelt werden, beispielsweise über 31 Bilder in dem obigen Zahlenbeispiel. Bei einer Implementierung mittels des Ringspeichers 80 der Fig. 8 kann bei einer Implementierung für jedes Ziel (Zeiger 82) eine Mittelung über alle Bilder des Ringspeichers 80 durchgeführt werden. Dabei wird für jedes Ziel die gesamte Mittelung durchgeführt. Bei einer Alternative wird ein alter Wert |Gₖ(f)|/31 (bei 31 Bildern) vom Mittelwert abgezogen und ein neuer Wert |Gᵢ(f)|/31 hinzuaddiert, wobei i der Index des Bildes ist, der bei einem "Weiterwandern" des Zeigers aus der Mittelung herausfällt und k der Index des Bildes ist, welches hinzukommt. So kann die Rechenzeit verringert werden.

Zu dem Ebenen-Fit ist noch Folgendes zu bemerken:
- Die Beträge von I(f) nehmen typischerweise vom Ursprung mit steigendem Betrag der Frequenz f deutlich um mehrere Zehnerpotenzen bis zu einer höchsten erfassten, oberen Frequenz ab. Daher werden bei Ausführungsbeispielen für den Ebenen-Fit nur die Werte von G(f) bei niedrigen Ortsfrequenzen herangezogen, da bei hohen Werten ein Rauschen dominieren kann.
- Bei mittleren und hohen Frequenz-Beträgen kann es vorkommen, dass arg{Gn(f)}-arg{Gn-1 (f)} nicht mehr im Wertebereich von ±π ist.
- Die Multiplikation mit der Gewichtungsfunktion (Fig. 4) im Ortsbereich ist im Frequenzbereich eine Faltung, die das Argument von G(f) verändert und im Hinblick auf den Ebenen-Fit vor allem H(f) bei geringen Frequenz-Beträgen verfälschen kann.

Die obigen Aspekte können den Ebenen-Fit erschweren. Um diese Probleme zu lösen oder abzumildern, können bei Ausführungsbeispielen der Erfindung verschiedene Maßnahmen ergriffen werden:
- Es werden bei jeder Kachelgröße die Funktion G(f) nur bei niedrigeren Frequenzen unterhalb einer Frequenzschwelle, die experimentell im Rahmen einer Kalibrierung bestimmt werden kann, herangezogen.
- Sehr kleine Ortsfrequenzen unterhalb einer weiteren Frequenzschwelle, die ebenfalls im Rahmen einer Kalibrierung bestimmt werden kann, werden nicht herangezogen.
- Die Gewichtungsfunktion der Fig. 4 wird geeignet gewählt.

Bei manchen Ausführungsbeispielen kann, falls Anteile bei niedrigeren Ortsfrequenzen der Fluktuation sich nur langsam über die Zeit ändern Differenzen von einem Bild zu einem nächsten Bild einer Abfolge von Bildern für den Ebenen-Fit verwendet werden, was einer Anzahl von Stufen bei der Kachelbildung, d.h. eine Anzahl von Durchläufen der Schleife der Fig. 2, verringern kann.

Nach dem letzten Durchlauf der Schritte 21-23 des Verfahrens der Fig. 2 bleibt als restliche Fluktuation zuzüglich Rotationsanteilen, welche durch die Ebenen-Fits kompensierten linearen Verschiebungen nicht erfasst werden, ein Wertebereich des Arguments von unter ±π, zu dem die bei den größeren Kacheln mit den Ebenen-Fits ermittelten Fluktuationen mit den Verschiebungen um einige ±π hinzuaddiert werden. Hierauf wird dann in Schritt 26 eine Fluktuationssignatur detektiert und auf Basis der Fluktuationssignatur kompensiert. Ein Beispiel für eine derartige Fluktuationssignatur für eine Frequenz f ist in Fig. 9 gegeben. Bei einer Ortsfrequenz f lassen sich aus I(f) durch Multiplikation mit der Fluktuationssignatur die Werte Gn(f) berechnen(Wobei hier Gn(f) allgemeiner definiert ist als in den Gleichungen (1) und (2). Hier ist Gn(f) das Ergebnis der Fluktuationssignatur, nicht nur der linearen Verschiebung wie in den Gleichungen (1) und (2), bezeichnet also das Bild im Ortsfrequenzraum mit allen Bildstörungen, welche in die Fluktuationssignatur einfließen) . Auf der Abszisse ist der Betrag und auf der Ordinate das Argument der komplexen Fluktuationssignatur aufgetragen, wobei die Argumente für höhere Frequenzen einen Wertebereich von - mehreren π bis + mehreren π aufweisen, wobei ein π bei der höchsten Frequenz einer Verschiebung um ein Pixel im Ortsbereich entspricht. Die einzelnen Punkte der Fluktuationssignatur sind also verschiedenen Gn(f) zugeordnet. Die kleinsten Beträge liegen typischerweise im Bereich von 0,3 bis 0,1, je stärker die Luftturbulenzen sind, desto geringer die Beträge.

Zum Identifizieren der Fluktuationssignatur können durch Kalibrierungsmessungen, die weiter unten kurz erläutert sind, eine Vielzahl typischer Fluktuationssignaturen hinterlegt sein, und durch Vergleich einer vorliegenden Fluktuationssignatur mit den hinterlegten Fluktuationssignaturen kann eine Fluktuationssignatur identifiziert werden. Nach dem Identifizieren der Fluktuationssignatur wird derjenige Spektraldichtewert in die restaurierte Spektraldichte eingetragen, der zum Wert 1 der Fluktuationssignatur gehört. Dieser Wert entspricht dem Mittelwert bei der Mittelung, wie er in der eingangs erwähnten Patentanmeldung DE 10 2015 120 967.5 erwähnt wird. Wie oben erläutert können ausgehend von I(f) durch Multiplikation mit der Fluktuationssignatur die Werte Gₙ(f) berechnet werden. Wenn nun umgekehrt für eine Frequenz die Werte Gₙ(f) bekannt sind (durch Spektraltransformation der aufgenommenen Bilder) und eine passende Fluktuationssignatur identifiziert wurde, ergibt sich der Wert I(f) an der Stelle mit Betrag 1 und Argument 0 der Fluktuationssignatur (vgl. Fig. 9). Dies ist der gesuchte Wert und wird als Restaurationsergebnis z.B. in den Ringspeicher 80 der Fig. 8 eingetragen Im Allgemeinen erstreckt sich die Fluktuationssignatur wie eine Wolke über eine gewisse Anzahl von Bildern, über viele oder auch alle Ortsfrequenzen einer aktuellen kleinsten Kachel, welche in dem Verfahren benutzt wird, oder auch über alle kleinsten Kacheln. Für eine noch bessere Implementierung kann der Inhalt des gesamten Ringspeichers herangezogen werden (also nicht nur eine gewisse Anzahl von Bildern), um die Restauration an einer Frequenz f weiter verbessert durchzuführen. Dabei wurde hier der Einfachheit halber die Restauration für eine Frequenz f im eindimensionalen Fall erläutert. Bei zweidimensionalen Bildern ist die Frequenz f durch eine zweidimensionale Frequenz fₓ, f_{y} für eine jeweilige kleinste Kachel i,j (i, j sind die Koordinaten der Kachel) eines jeweiligen Bildes zu ersetzen. Zu jeder Fluktuationssignatur ist also eine Ortsfrequenz fx, fy einer Kachel und eines Bildes, an der der restaurierte Spektraldichtewert in das Restaurationsergebnis eingetragen wird zugeordnet.

In der Fluktuationssignatur kann auch eine Entfernung in der komplexen Ebene von Bild zu Bild berücksichtigt werden. In dem Beilspiel der Fig. 9 kann jedem "Punkt" eine Nummer eines jeweiligen Bildes in der Abfolge von Bildern zugeordnet werden. Darauf aufbauend kann bei einem Ausführungsbeispiel jedem oder fast jedem Punkt eine Entfernung in der komplexen Ebene der Fig. 9 zu einem Punkt eines vorherigen Bildes zugeordnet werden, entweder als komplexe Differenz oder als Differenz der Argumente. Auf dieser Basis kann berücksichtigt werden, wie deutlich die Fluktuation von Bild zu Bild ist, wodurch die Restauration weiter verbessert werden kann.

Für kleinere Zeitabschnitte, zum Beispiel Minuten, bleibt die Fluktuationscharakteristik bei Bildstörungen typischerweise unverändert, und es genügt eine begrenzte Anzahl von Bildern aus, um die Fluktuationssignatur zu erfassen, beispielsweise währen einer Sekunde aufgenommene Bilder. Dabei kann eine Gewichtungsfunktion verwendet werden, die die Werte aus Bildern am Anfang und am Ende des Zeitabschnittes, über den die Bilder aufgenommen werden, weniger stark berücksichtigen. Nach einer größeren Zeit, zum Beispiel nach einer halben Stunde, kann sich die Fluktuationssignatur ändern, beispielsweise aufgrund einer Änderung der Wärmeeinstrahlung und damit verbundener Turbulenzen.

Die Fluktuationssignatur ist zunächst vieldimensional. Zur praktischen Handhabung und Identifizierung gibt es verschiedene Möglichkeiten, die Komplexität der vieldimensionalen Fluktuationssignatur zu reduzieren und somit die Verarbeitung zu erleichtern, die auch abhängig sein können von der Intensität und Charakteristik der Luftturbulenzen. Grundsätzlich können allgemein aus der Mustererkennung bekannte Herangehensweisen verwendet werden.

Beispiel hierfür ist eine Zerlegung in Basisfunktionen und Skalierungswerte, wobei verschieden Skalierungswerte unterschiedlich intensive Luftturbulenzen widerspiegeln. In vielen Fällen kann es ausreichend sein nur wenige Dimensionen (z.B. Abhängigkeiten) zu berücksichtigen, wie in Fig. 9 dargestellt. In der Fig. 9 ist insbesondere nur eine Abhängigkeit von Bild zu Bild berücksichtigt, was im Allgemeinen gute Ergebnisse liefert. Es können aber auch andere Abhängigkeiten, Dimensionen und/oder Informationen berücksichtigt werden, die z.B. sich aus allen Daten in dem Ringspeicher 80 ergeben.

Wie bereits kurz erwähnt kann durch separate Experimente und Kalibrierungen geklärt werden, bei welcher erkannten Fluktuationssignatur welcher komplexer Wert am Ende statt der herkömmlichen Mittelung als Restaurationsergebnis verwendet werden soll. Diese Vorgehensweise schließt eine Kompensation von Kontrastverlusten durch Luftturbulenzen, aber auch durch die optische Abbildung, mit dem Ansatz einer Wiener Inversfilterung ein. Die Fluktuationssignatur ist typischerweise abhängig von der Intensität von Luftturbulenzen, dem Abstand von Objekt und Objektiv, der Lage im Bild und der aufgenommen Szene.

Die Verwendung von Fluktuationssignaturen statt einer herkömmlichen Mittelung über Argument (und gegebenenfalls Betrag) ist robuster und rauschunempfindlicher. Zudem erleichtert die Verwendung von Fluktuationssignaturen das Separieren von Effekten, die durch Luftturbulenzen hervorgerufen wurden, und von Effekten von sich bewegenden Objekten. Neben Luftturbulenzen können auch Bewegungen von Kamera und Objektive kompensiert werden, die beispielsweise durch Wind oder kleine unbeabsichtigte Kameraschwenks hervorgerufen werden.

Zu den Fluktuationssignaturen können im Rahmen der oben erwähnten Kalibrierung auf unterschiedliche Weise gewonnen werden. Beispielsweise kann eine typische Szene bei unterschiedlichen Intensitäten von Luftturbulenzen von keinen bis zu stärksten vorkommenden Turbulenzen aufgenommen werden. Ohne Luftturbulenzen wird das Bild aufgenommen, das dann im Wesentlichen das Ziel der Restauration ist. Mit sich verstärkenden Turbulenzen treten dann die verschiedenen Fluktuationssignaturen auf, die in Beziehung gesetzt werden zum Restaurationsziel, d.h. es wird überprüft, welche Restaurationsvorgänge nötig sind, um von dem mit den Turbulenzen aufgenommen Bild zu dem Zielbild zu gelangen. Beides, die Fluktuationssignatur und die Beziehung zu dem Restaurationsziel wird abgespeichert, wobei die Fluktuationssignaturen wie oben erwähnt in Basisfunktionen und Skalierungswerte zerlegt werden können.

Dabei wird auch festgelegt, in welchen Schritten später bei der Restauration die Zerlegung der Bilder in gegebenenfalls immer kleiner werdende Kacheln vorgenommen werden soll. Dabei fließt die Stärke der Luftturbulenzen ein. Als Folge davon wird bei Ausführungsbeispielen die Kachelgröße schrittweise so reduziert, dass Fluktuationssignaturen, die sich über viele π erstrecken, später bei der Restauration noch sicher erfasst werden können.

Zu bemerken ist, dass in unterschiedlichen Bildbereichen unterschiedliche Fluktuationssignaturen auftreten können.

Bei manchen Ausführungsbeispielen kann ein Ebenen-Fit bezüglich der Änderung des Arguments gemäß dem Verschiebungssatz von Bild zu Bild im Ortsfrequenzraum durchgeführt werden, um die störende Bewegung zu kompensieren und zudem eine zu separierende Bewegung (d.h. eine Bewegung, die tatsächlich vorliegt, z.B. durch Bewegung eines aufgenommenen Objekts) zu bestimmen. Dies kann insbesondere bei 2d-Bildsensoren eingesetzt werden. Eine zu separierende Bewegung kann beispielsweise vorliegen, wenn von einem Flugzeug aus Videoaufnahmen gemacht werden. Die zu separierende Bewegung wird dann durch die Bewegung des Flugzeugs verursacht. Ähnliches gilt bei anderen Fahrzeugen. Auch bei anderen Anwendungen, z.B. bei einem Operationsmikroskop, kann eine solche Bewegung auftreten, z.B. zu einer Bewegung eines Operateurs mit seinen Instrumenten von einer Bewegung eines Mikroskopkopfs über dem ruhenden Patienten (welche z.B. kompensiert werden soll).

Tritt eine Bewegung nur mancher Bildteile auf, werden bevorzugt mehrere Kacheln verwendet. So können Bildteile mit sich bewegenden Objekten anders behandelt werden als Bildteile ohne solche Objekte. Dabei kann eine Bewegung von Objekten möglichst gut erhalten werden, während unerwünschte Bewegungen kompensiert werden. Die Anzahl und Größe der Kacheln kann dabei dynamisch angepasst werden, indem z.B. mit Mustererkennungsverfahren erkannt wird, wo und in welchen Kacheln sich bewegende Objekte auftreten.

Um auch eine Bewegung eines Teils des aufgenommenen Bildes (beispielsweise eines Automobils oder eines Lastkraftwagens) zu berücksichtigen, können bei manchen Ausführungsbeispielen Kacheln, in denen so ein derartiges Geschehen erkannt wurde, beispielsweise anhand einer relativ großen Bewegung in dem jeweiligen Bildteil, unverändert (unrestauriert) gelassen werden. Um derartige Effekte noch genauer zu berücksichtigen, können auch im Verhältnis zur Größe von Luftturbulenzen kleine Kacheln verwendet werden. Dabei werden örtlich und zeitlich benachbarte Kacheln herangezogen, um Bewegungen von nur Teilen des Bildes zu erkennen und anschließend gegebenenfalls eine Kompensation durchzuführen.

Falls so erkannt wird, dass in einer Kachel nur ein Flimmern durch Luftschlieren auftritt, kann dieses wie oben beschrieben kompensiert werden, d.h. durch Ebenen-Fits und Fluktuationssignaturen.

Falls erkannt wird, dass in einer Kacheln ein Flimmern vorliegt und zudem ein sich bewegendes Objekt vollständig in der Kachel vorhanden ist, kann durch die die Betrachtung der Abhängigkeit über der Zeit beides voneinander getrennt werden, da Flimmern Fluktuationen hervorruft, während beispielsweise bei einer Bewegung die Verschiebung linear wächst. Durch diese Trennung kann dann nur die durch Flimmern hervorgerufene Fluktuation über der Zeit korrigiert werden.

Falls erkannt wird, dass in einer Kachel außer Flimmern ein sich bewegendes Objekt nur teilweise im Bereich der jeweiligen Kachel vorhanden ist, kann durch Analyse von benachbarten Kacheln ermittelt werden, wie dort die Verschiebung über der Zeit durch Flimmern ist. Diese Verschiebung kann dann für die aktuelle Kachel interpoliert werden und anschließend zur Kompensation herangezogen werden. Beispielsweise kann die Verschiebung aus benachbarten Kacheln gemittelt werden. Kompensiert wird wieder auf Basis des Verschiebungssatzes mit einem frequenzproportionalen Faktor.

Zusätzlich zu den oben beschriebenen Operationen auf dem Bild können auch weitere herkömmliche Verfahren angewendet werden, beispielsweise eine Schärfen der Bilder. Zudem kann das beschriebene Verfahren auch mit den in der DE 10 2015 120 967.5 beschriebenen Verfahren korrigiert werden.

Bei dem Erkennen der Fluktuationssignatur kann eine Schwelle gesetzt werden. Diese Schwelle kann bestimmen, bis wann eine Signatur als erkannt gilt, d.h. wie ähnlich eine vorliegende Signatur einer abgespeicherten Signatur sein muss. Falls innerhalb dieser Schwelle keine Signatur mehr erkannt werden kann, beispielsweise wegen starkem Rauschen, wird der zu restaurierende Betrag auf 0 gesetzt, um informationsloses Rauschen aus dem Bild zu entfernen. Das heißt, es wird im Wesentlichen ein Wiener Filter auf das Bild angewendet.

Das Verfahren der Figur 2 kann wie erwähnt zunächst auf Schwarz-Weiß- bzw. Grauwert-Videos angewendet werden. Eine Erweiterung auf farbige Videos oder andere farbige Abfolgen von Bildern ist jedoch möglich. Bei einem Ausführungsbeispiel wird dabei das Unterteilen in Kacheln und die Transformation bzw. Rücktransformation (Schritte 20, 21, 23 und gegebenenfalls 25 der Figur 2) getrennt für verschiedene Farbkanäle durchgeführt. Beispielsweise werden bei einer Abfolge von RGB-(Rot, Grün, Blau) Bildern diese Schritte getrennt für den roten Kanal, den grünen Kanal und den blauen Kanal durchgeführt. Die Schritte 22 und 26 können dann auf Grauwerten, welche auf Basis der roten, grünen und blauen Komponenten gebildet werden, durchgeführt werden. Beispielsweise wird in Schritt 22 aus den Spektraldichten für roten, grünen und blauen Kanal eine Spektraldichte für Grauwerte durch Mittelung gebildet, und auf Basis dieser Spektraldichte für Grauwerte werden dann durchzuführende Änderungen an dem Argument der Spektraldichte wie oben beschrieben ermittelt. Diese Änderungen können dann auf die Spektraldichten für roten, grünen und blauen Kanal angewendet werden.

Die Mittelung kann dabei auch als gewichtete Mittelung erfolgen. Dabei kann beispielsweise berücksichtigt werden, dass das menschliche Auge für grünes Licht empfindlicher ist als für rotes oder blaues Licht, sodass der grüne Kanal höher gewichtet werden kann als der rote oder blaue Kanal. Ähnlich kann mit dem Mitteln und/oder Schärfen des Schrittes 26 verfahren werden.

Zudem kann bei manchen Ausführungsbeispielen wie erwähnt das Verfahren der Figur 2 dahingehend erweitert werden, dass "echte" Bewegungen von unerwünschten Bewegungen (beispielsweise durch die erwähnten Luftschlieren) unterschieden werden können. Derartige "echte" Bewegungen können beispielsweise Objekte sein, die sich durch die aufgenommenen Bilder bewegen, beispielsweise ein fahrendes Kraftfahrzeug oder eine sich bewegende Person.

Bei manchen Ausführungsbeispielen kann ein sich bewegendes Objekt dadurch erkannt werden, dass das Argument der Spektraldichte in einer Kachel stärker variiert als in benachbarten Kacheln im gleichen Zeitabschnitt, beispielsweise um mehr als eine vorgegebene Schwelle stärker variiert. Beispielsweise kann in einer betrachteten Kachel die Werte des Arguments der Spektraldichte in einem Zeitabschnitt um +/- 90 Grad variieren, während das Argument im gleichen Zeitabschnitt in benachbarten Kacheln nur um +/- 30 Grad variiert. Dies lässt darauf schließen, dass sich in der betrachteten Kacheln ein sich bewegendes Objekt befindet, während die Änderung des Arguments in den benachbarten Kacheln beispielsweise durch Luftschlieren und dergleichen hervorgerufen sein kann.

Wird auf diese Weise festgestellt, dass sich in einer bestimmten Kachel ein bewegliches Objekt befindet, sind verschiedene Vorgehensweisen möglich. Bei manchen Ausführungsbeispielen kann eine derartige Kachel einfach ohne Restauration (d.h. ohne beispielsweise den Schritt 22 und/oder den Schritt 26 für diese Kachel durchzuführen) angezeigt werden. Bei anderen Ausführungsbeispielen können die Komponenten der Veränderungen zum Beispiel des Arguments der Spektraldichte für das bewegte Objekt und für das Flimmern voneinander getrennt werden, um beispielsweise nur die Komponente für das Flimmern auszugleichen, ohne die Komponente für das sich bewegende Objekt zu verfälschen. Bei manchen Ausführungsbeispielen kann dies anhand der Größe der Veränderung im Ortsbereich gemacht werden. Beispielsweise wird die Fläche von großflächigem Flimmern, verursacht durch großflächige Luftschlieren, häufig größer sein als die von kleinen, sich bewegenden Objekten.

Gegebenenfalls kann dies auf Basis der Kachelgrößen bei den verschiedenen Durchläufen geschehen.

Bei anderen Ausführungsbeispielen wird eine Unterscheidung anhand der Bewegungsrichtung getroffen. Ein sich bewegendes Objekt bewegt sich häufig während eines Zeitabschnitts gleichmäßig oder zumindest immer in die gleiche Richtung, während beispielsweise ein durch Luftschlieren verursachtes Flimmern fluktuierenden Charakter besitzt, sodass hier die Verschiebungen die Richtung ändern können. Auch andere Eigenschaften, mit denen sich Störungen durch Luftschlieren oder andere unerwünschte Bewegungen von normal bewegenden Objekten unterscheiden, können als Grundlage für die Unterscheidung genutzt werden.

Wie bereits erläutert, werden die oben erläuterten Ausführungsbeispiele auf eine Abfolge von Bildern, beispielsweise Bildern eines Videos, angewendet. Auf diese Weise können Störungen wie Luftschlieren oder Erschütterungen kompensiert werden. Es ist jedoch ebenso möglich, als Ergebnis nur ein einzelnes Bild auszugeben, wie bei herkömmlichen Einzelbildfotoapparaten üblich. In diesem Fall wird von einer Kameraeinrichtung wie der in Figur 1 dargestellten Kameraeinrichtung eine Abfolge von Bildern aufgenommen, welche das schlussendlich auszugebende Bild sowie eine Reihe von Bildern vor und nach dem Bild, um das oben beschriebene Verfahren durchführen zu können, umfasst. Dabei können derartige Aufnahmen mit hoher Bildwiederholfolge aufgenommen werden, beispielsweise mit 300 Aufnahmen in der Sekunde. Auf diese Weise kann in dem schlussendlich ausgegebenen Einzelbild wie oben beschrieben eine Verzeichnung bzw. Verschiebungen durch Flimmern kompensiert werden, wobei optional sich bewegende Objekte wie beschrieben berücksichtigt werden können. Zudem kann eine Schärfung durchgeführt werden, welche an erkannte Störungen, beispielsweise Luftschlierenstörungen, angepasst ist.

Wie bereits erwähnt, kann das Verfahren der Figur 2 auch zur Bildstabilisierung, d.h. zur Kompensation von Erschütterungen oder Verwacklern, verwendet werden. Dabei kann es ausreichend sein, nur eine Kachelgröße zu verwenden (d.h. einen Durchlauf der Schritte 21 bis 23 der Figur 2 zu verwenden). Bei dieser Anwendung wird typischerweise nur die translatorische Verschiebung, d.h. eine Verschiebung in eine bestimmte Richtung, kompensiert. Hierzu kann wie beschrieben eine Analyse der Verschiebung (d.h. der Änderung des Arguments der Spektraldichte nach der Transformation bei 21) über der Zeit durchgeführt werden, wobei Verschiebungen aufgrund von Erschütterungen von Objektbewegungen (wie oben beschrieben) unterschieden werden können. So kann die Verschiebung bei manchen Ausführungsbeispielen sehr genau kompensiert werden, teilweise mit einer Genauigkeit unterhalb eines Pixels.

## Patentansprüche

1. Computerimplementiertes Verfahren zur Bildbearbeitung, umfassend:
Identifizieren einer Fluktuationssignatur im Ortsfrequenzraum basierend auf einer Abfolge von Bildern, wobei die Fluktuationssignatur auf Basis eines Vergleichs der Fluktuationssignatur im Ortsfrequenzraum auf Basis der Abfolge von Bildern mit mehreren gespeicherten Fluktuationssignaturen identifiziert wird, und wobei die Fluktuationssignatur eine charakteristische Verteilung der Spektraldichtefunktion über mehrere Bilder im Ortsfrequenzraum ist, und
Restaurieren mindestens eines Bildes der Abfolge von Bildern auf Basis der detektierten Fluktuationssignatur, wobei das Restaurieren auf Basis einer den gespeicherten Fluktuationssignaturen zugeordneten Restaurationsinformation geschieht.

2. Verfahren nach Anspruch 1, wobei die Fluktuationssignatur eine Mehrzahl von komplexwertigen Punkten aufweist, wobei jeder Punkt einem Bild der Abfolge von Bildern zugeordnet ist.

3. Verfahren nach einem der Ansprüche 1-2, weiter umfassend:
Unterteilen der Bilder in eine oder mehrere Kacheln,
Transformieren der Kacheln in den Ortsfrequenzraum,
Identifizieren von linearen Verschiebungen in den Kacheln,
Kompensieren zumindest eines Teils der identifizierten linearen Verschiebungen, und Rücktransformieren der Kacheln in den Ortsraum,
wobei das Unterteilen, das Transformieren, das Identifizieren, das Kompensieren und das Rücktransformieren N · N ≥ 1, wiederholt wird,
wobei die identifizierten linearen Verschiebungen gespeichert werden,
wobei die Fluktuationssignatur auf den Verschiebungen basiert.

4. Verfahren nach Anspruch 3, wobei das Identifizieren der linearen Verschiebung ein Ermitteln eines Proportionalitätsfaktors im Ortsfrequenzraum durch ein Fitten einer Ebene im Ortsfrequenzraum umfasst.

5. Verfahren nach Anspruch 4, wobei das Fitten auf Basis von Differenzen von Bild zu Bild der Abfolge von Bildern vorgenommen wird.

6. Verfahren nach einem der Ansprüche 1-5, weiter umfassend, Anwenden eines Wiener Filters, falls die Fluktuationssignatur nicht identifizierbar ist.

7. Verfahren nach einem der Ansprüche 1-6, wobei ein oder mehrere Verfahrensschritte des Verfahrens dynamisch in Abhängigkeit von den Kacheln und/oder einem Inhalt der Bilder angepasst werden.

8. Verfahren nach einem der Ansprüche 1-7, umfassend ein Mitteln im Ortsfrequenzraum über mehrere Bilder.

9. Vorrichtung zur Bildbearbeitung, umfassend:
eine Recheneinrichtung mit mindestens einem Prozessor (13) und einem Speicher (14),
wobei in dem Speicher (14) eine Abfolge von Bildern speicherbar ist, wobei der Prozessor eingerichtet ist, folgende Schritte durchzuführen:
Identifzieren einer Fluktuationssignatur im Ortsfrequenzraum basierend auf der Abfolge von Bildern, wobei die Fluktuationssignatur auf Basis eines Vergleichs der Fluktuationssignatur im Ortsfrequenzraum auf Basis der Abfolge von Bildern mit mehreren in dem Speicher (14) gespeicherten Fluktuationssignaturen identifiziert wird, und wobei die Fluktuationssignatur eine charakteristische Verteilung der Spektraldichtefunktion über mehrere Bilder im Ortsfrequenzraum ist, und
Restaurieren mindestens eines Bildes der Abfolge von Bildern auf Basis der detektierten Fluktuationssignatur, wobei das Restaurieren auf Basis einer den gespeicherten Fluktuationssignaturen zugeordneten Restaurationsinformation geschieht.

10. Vorrichtung nach Anspruch 9, wobei die Vorrichtung zur Durchführung des Verfahrens nach einem der Ansprüche 2-8 eingerichtet ist.

11. Vorrichtung nach Anspruch 9 oder 10, weiter umfassend ein optisches System (16) und eine mit dem optischen System (16) gekoppelte Kameraeinrichtung (10) zum Aufnehmen der Abfolge von Bildern.

12. Computerprogramm mit einem Programmcode, der, wenn er auf einer Recheneinrichtung (11) ausgeführt wird, diese veranlasst, das Verfahren nach einem der Ansprüche 1-8 durchzuführen.

## Claims

1. Computer-implemented method for image processing, comprising:
identifying a fluctuation signature in the spatial frequency domain on the basis of a sequence of images, wherein the fluctuation signature is identified on the basis of a comparison of the fluctuation signature in the spatial frequency domain on the basis of the sequence of images with multiple stored fluctuation signatures, and wherein the fluctuation signature is a characteristic distribution of the spectral density function over multiple images in the spatial frequency domain, and restoring at least one image of the sequence of images on the basis of the detected fluctuation signature, wherein the restoring takes place on the basis of restoration information assigned to the stored fluctuation signatures.

2. Method according to Claim 1, wherein the fluctuation signature has a plurality of complex-valued points, wherein each point is assigned to an image of the sequence of images.

3. Method according to either of Claims 1-2, further comprising:
subdividing the images into one or more tiles,
transforming the tiles into the spatial frequency domain,
identifying linear shifts in the tiles,
compensating for at least a portion of the identified linear shifts, and
inverse transforming the tiles into the space domain, wherein the subdividing, the transforming, the identifying, the compensating and the inverse transforming are repeated N · N ≥ 1,
wherein the identified linear shifts are stored,
wherein the fluctuation signature is based on the shifts.

4. Method according to Claim 3, wherein identifying the linear shift comprises ascertaining a proportionality factor in the spatial frequency domain by fitting a plane in the spatial frequency domain.

5. Method according to Claim 4, wherein the fitting is carried out on the basis of differences from image to image of the sequence of images.

6. Method according to any of Claims 1-5, further comprising applying a Wiener filter if the fluctuation signature is not identifiable.

7. Method according to any of Claims 1-6, wherein one or more method steps of the method are adapted dynamically depending on the tiles and/or a content of the images.

8. Method according to any of Claims 1-7, comprising averaging in the spatial frequency domain over multiple images.

9. Apparatus for image processing, comprising:
a computing device having at least one processor (13) and a memory (14), wherein a sequence of images is storable in the memory (14), wherein the processor is configured to carry out the following steps:
identifying a fluctuation signature in the spatial frequency domain on the basis of the sequence of images, wherein the fluctuation signature is identified on the basis of a comparison of the fluctuation signature in the spatial frequency domain on the basis of the sequence of images with multiple fluctuation signatures stored in the memory (14), and wherein the fluctuation signature is a characteristic distribution of the spectral density function over multiple images in the spatial frequency domain, and restoring at least one image of the sequence of images on the basis of the detected fluctuation signature, wherein the restoring takes place on the basis of restoration information assigned to the stored fluctuation signatures.

10. Apparatus according to Claim 9, wherein the apparatus is configured to carry out the method according to any of Claims 2-8.

11. Apparatus according to Claim 9 or 10, further comprising an optical system (16) and a camera device (10), coupled to the optical system (16), for recording the sequence of images.

12. Computer program having a program code which, when executed on a computing device (11), causes said computing device to carry out the method according to any of Claims 1-8.

## Revendications

1. Procédé mis en œuvre par ordinateur de traitement d'images, comprenant :
identification d'une signature de fluctuation dans l'espace de fréquences local sur la base d'une séquence d'images, la signature de fluctuation étant identifiée sur la base d'une comparaison de la signature de fluctuation dans l'espace de fréquences local sur la base de la séquence d'images avec plusieurs signatures de fluctuation mémorisées, et la signature de fluctuation étant une distribution caractéristique de la fonction de densité spectrale sur plusieurs images dans l'espace de fréquences local, et
restauration d'au moins une image de la séquence d'images sur la base de la signature de fluctuation détectée, la restauration s'effectuant sur la base d'une information de restauration associée aux signatures de fluctuation mémorisées.

2. Procédé selon la revendication 1, la signature de fluctuation présentant une pluralité de points à valeur complexe, chaque point étant associé à une image de la séquence d'images.

3. Procédé selon l'une des revendications 1 et 2, comprenant en outre :
subdivision des images en un ou plusieurs carreaux,
transformation des carreaux dans l'espace de fréquences local,
identification de décalages linéaires dans les carreaux, compensation d'au moins une partie des décalages linéaires identifiés et transformation inverse des carreaux dans l'espace local,
la subdivision, la transformation, l'identification, la compensation et la transformation inverse étant répétées N fois, avec N ≥ 1,
les décalages linéaires identifiés étant mémorisés,
la signature de fluctuation se basant sur les décalages.

4. Procédé selon la revendication 3, l'identification du décalage linéaire comprenant une détermination d'un facteur de proportionnalité dans l'espace de fréquences local par un ajustement d'un plan dans l'espace de fréquences local.

5. Procédé selon la revendication 4, l'ajustement étant réalisé sur la base de différences d'une image à l'autre de la séquence d'images.

6. Procédé selon l'une des revendications 1 à 5, comprenant en outre :
application d'un filtre de Wien dans le cas où la signature de fluctuation n'est pas identifiable.

7. Procédé selon l'une des revendications 1 à 6, une ou plusieurs étapes du procédé étant adaptées dynamiquement en fonction des carreaux et/ou d'un contenu des images.

8. Procédé selon l'une des revendications 1 à 7, comprenant un calcul de la moyenne dans l'espace de fréquences local sur plusieurs images.

9. Arrangement de traitement d'images, comprenant :
un dispositif de calcul comprenant au moins un processeur (13) et une mémoire (14), une séquence d'images pouvant être mémorisées dans la mémoire (14), le processeur étant conçu pour exécuter les étapes suivantes :
identification d'une signature de fluctuation dans l'espace de fréquences local sur la base de la séquence d'images, la signature de fluctuation étant identifiée sur la base d'une comparaison de la signature de fluctuation dans l'espace de fréquences local sur la base de la séquence d'images avec plusieurs signatures de fluctuation mémorisées dans la mémoire (14), et la signature de fluctuation étant une distribution caractéristique de la fonction de densité spectrale sur plusieurs images dans l'espace de fréquences local, et
restauration d'au moins une image de la séquence d'images sur la base de la signature de fluctuation détectée, la restauration s'effectuant sur la base d'une information de restauration associée aux signatures de fluctuation mémorisées.

10. Arrangement selon la revendication 9, l'arrangement étant conçu pour mettre en œuvre le procédé selon l'une des revendications 2 à 8.

11. Arrangement selon la revendication 9 ou 10, comprenant un système optique (16) et un dispositif de caméra (10) couplé au système optique (16) et destiné à enregistrer la séquence d'images.

12. Programme informatique comprenant un code de programme qui, lorsqu'il est exécuté sur un dispositif de calcul (11), amène celui-ci à mettre en œuvre le procédé selon l'une des revendications 1 à 8.
